# EUROPEAN PATENT SPECIFICATION

(11) **EP 1 304 462 B1**
(45) Date of publication and mention of the grant of the patent: **13.12.2006**
(21) Application number: 02023143.7
(22) Date of filing: 15.10.2002
(51) Int. Cl.: F02B 37/24, F01D 17/16

(54) **Control apparatus of actuator**
Steuersystem eines Stellglieds
Dispositif de commande d'un actionneur

(30) Priority: 22.10.2001 JP 2001323231
(43) Date of publication of application: 23.04.2003
(73) Proprietor: Toyota Jidosha Kabushiki Kaisha, Toyota-shi, Aichi-ken, 471-8571 (JP); KABUSHIKI KAISHA TOYOTA JIDOSHOKKI, Kariya-shi, Aichi-ken 448-8671 (JP)
(72) Inventor: Itoh, Yoshiyasu, Toyota-shi, Aichi-ken, 471-8571 (JP); Kinuhata, Hiroki, Toyota-shi, Aichi-ken, 471-8571 (JP); Narita, Yuuji, Kariya-shi, Aichi-ken, 448 8671 (JP)
(74) Representative: TBK-Patent

(56) References cited:
- EP-A- 0 899 437
- DE-A- 19 949 931
- DE-C- 19 858 293
- JP-U- 59 152 173
- JP-U- 64 008 569
- US-A- 4 385 602
- US-A- 4 926 640

## Description

The invention relates to a control apparatus and method according to claims 1 and 9, respectively.

Conventionally, an internal combustion engine for an automobile and the like includes various types of members that are driven by an actuator. A variable nozzle (nozzle vane) of a variable nozzle type turbocharger is one of the aforementioned members or driven members.

The variable nozzle is disposed in an exhaust passage through which the exhaust gas from the internal combustion engine is blown against a turbine wheel of the turbocharger The variable nozzle is operated, that is, opened or closed so as to change an area of the exhaust passage through which the exhaust gas flows. The flow velocity of the exhaust gas flowing through the exhaust passage becomes variable so as to change the rotating speed of the turbocharger. This makes it possible to adjust a boost pressure or intake pressure.

As an actuator for operating the variable nozzle, a direct current (DC) motor may be employed. The DC motor is driven to displace the variable nozzle based on a predetermined reference position. The opening of the variable nozzle, thus, can be adjusted so as to change the boost pressure of the internal combustion engine. The variable nozzle has stoppers that define limit points at the full closing side and the full opening side of the range in which the variable nozzle is displaced so as to prevent the variable nozzle from being excessively displaced over the limit points.

The reference position based on which the variable nozzle is displaced may be set as the point where the variable nozzle is fully opened. In this case, the variable nozzle is displaced to the opening side immediately after start-up of the internal combustion engine until it abuts on the stopper. The position at which the variable nozzle abuts on the stopper, that is, full opening position is set as the reference position. The variable nozzle can be displaced to the full opening side during operation of the engine, for example, start-up of the engine. This is because such displacement may not cause excessive increase in the flow velocity of the exhaust gas blown against the turbine wheel, thus preventing excessive rise in the boost pressure of the engine.

As aforementioned, the reference position of the variable nozzle is determined at every start-up of the engine. This makes it possible to displace the variable nozzle appropriately with respect to the reference position upon start-up of the engine even when the variable nozzle is manually operated for the purpose of inspection or the like during stop of the engine.

In the case where the variable nozzle is located at the point close to the full closing position, and the full opening position is set as the reference position, it has to be displaced from the point far away from the reference position. Accordingly the variable nozzle located at the full closing position is unlikely to be displaced with accuracy. Such displacement may become undesirable for adjusting the boost pressure. When the variable nozzle is located at the point close to the full closing position, shifting of the variable nozzle from the reference position may greatly influence rotation of the turbocharger. It is, therefore, important to displace the variable nozzle with accuracy.

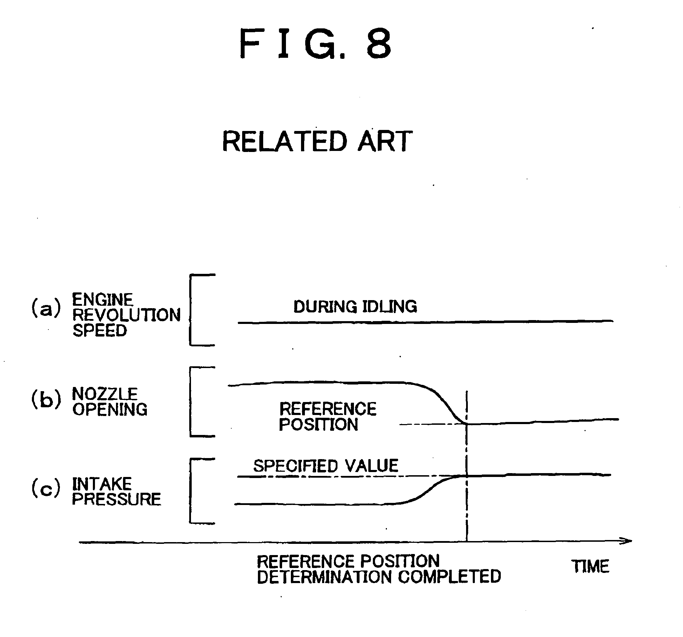

Toyota Technical Report (No. 11489) has introduced the technique for setting the reference position for displacing the variable nozzle. The technique for setting the reference position will be described referring to the time chart shown in Fig. 8. The time chart shows each change in the engine speed (a), opening of the variable nozzle (b), and the intake pressure (c) with respect to a time axis.

According to the technique, the reference position is set during idling of the internal combustion engine. During idling operation immediately after the start-up of the engine, the variable nozzle is gradually displaced toward the closing side. Along with the displacement of the variable nozzle, the flow velocity of the exhaust gas blown against the turbine wheel becomes high to gradually increase the intake pressure. The reference position is determined as the point where the variable nozzle locates when the intake pressure increases to reach a predetermined value.

In the aforementioned technique, the reference position corresponds to the point closer to the full closing position. In the case where the variable nozzle is located at a point near the full closing position for adjusting the opening, the displacement of the variable nozzle can be performed at a point near the reference position. This makes it possible to displace the variable nozzle accurately. Therefore such displacement is suitable for adjusting the boost pressure.

However, displacement of the variable nozzle toward the closing side reduces the section area of the exhaust passage through which the exhaust gas flows. The resultant flow velocity of the exhaust gas blown against the turbine wheel is increased, leading to the increased rotating speed of the turbocharger Therefore, displacement of the variable nozzle under load may given an adverse influence to the engine. It is preferable to displace the variable nozzle toward the closing side for setting the reference position during idling operation which may minimize the adverse influence of the displacement to the engine.

It is preferable to set the reference position by displacing the variable nozzle toward the closing side during the idling operation especially at a moment just after start-up of the engine such that the variable nozzle can be displaced with respect to the reference position at an earlier stage just after start-up of the engine.

In the case where the vehicle is started immediately after start-up of the engine, idling operation is not performed just after start-up of the engine. It is not preferable to set the reference position by displacing the variable nozzle toward the closing side at a moment other than after start-up of the engine. As a result, the boost pressure is adjusted by displacing the variable nozzle without setting the reference position. As a result, the variable nozzle cannot be displaced with accuracy.

US-4 385 602 discloses a generic control apparatus of an internal combustion engine, for controlling an actuator which displaces a driven member within a displacement range confined by a stopper, the control apparatus comprising control means that drives the actuator until the driven member abuts on the stopper and determines the position of the driven member when it abuts on the stopper as reference position in a stopped state of the internal combustion engine.

It is the object of the present invention, to provide a control apparatus of an internal combustion engine, which improves the startability of the internal combustion engine.

This object is solved by the control apparatus of an internal combustion engine having the features of claim 1 and the method having the features of claim 9. The invention is further developed as it is defined in the dependent claims.

If the actuator is driven to bring the driven member on the stopper during running of the engine so as to set the reference, the operating state of the engine may be deteriorated. According to the embodiment, the actuator is driven during stop of the engine so as to set the reference position at the subsequent start-up of the engine such that the driven member is displaced without adversely influencing the operating state of the engine. As the reference position for displacing the driven member is already set at a moment after start-up of the engine, it can be precisely displaced with respect to the reference position.

The driven member is a variable nozzle that is opened/closed so as to make the flow velocity of the exhaust gas blown against the turbine wheel of the turbocharger variable.

The actuator for operating the aforementioned valve mechanisms such as the variable nozzle, throttle valve and EGR valve may include an electric motor, for example, direct current (DC) motor, rotary solenoid and the like.

When the driven member is located farther away from the stopper than a predetermined initial position, the controller sets the predetermined initial position as the reference position.

According to the embodiment, even when the driven member has not reached the stopper for a certain reason at the subsequent start-up of the engine, the initial position is set as the reference position. The driven member, thus, can be precisely displaced at an earlier state just after start-up of the engine.

The controller monitors an operating state of the actuator, and determines whether an abutment of the driven member on the stopper has been completed on the basis of the monitored operating state of the actuator.

According to the embodiment, completion of the abutment of the driven member on the stopper can be accurately detected. In the case where the electric motor such as the DC motor, torque motor and rotary solenoid is employed as the actuator, the motor current value is monitored to determine the operating state of the actuator.

The controller displaces the driven member in a direction reverse to that of the abutment before the driven member abuts on the stopper.

According to the embodiment, the driven member is displaced in a direction reverse to the direction in which the driven member is brought into abutment on the stopper such that deposits adhered on the displacement path of the driven member can be removed. It is preferable to displace the driven member in the reverse direction within the range in which the driven member is allowed to be displaced for removing the deposits. If the reverse displacement of the driven member is performed during stop of the engine, the deposits can be removed at least once at every operation of the engine.

The controller decelerates or stops the displacement of the driven member towards the stopper just before the driven member abuts on the stopper.

According to the embodiment, an impact caused by the abutment of the driven member on the stopper can be reduced, thus restraining occurrence of defects like deformation of the stopper from occurring.

### BRIEF DESCRIPTION OF THE DRAWINGS

Fig. 1 is a schematic view showing an overall structure of a variable nozzle type turbocharger provided in an engine and a control apparatus for driving and controlling the variable nozzle system of the turbocharger according to an embodiment of the invention;
Fig. 2 is a front view showing a detailed structure of the variable nozzle system;
Fig. 3 is a sectional view in which the variable nozzle system in Fig. 2 is viewed from a direction of an arrow A-A;
Fig. 4 is an enlarged view showing a state in which an open/close lever of the variable nozzle system is abutted on a stopper;
Fig. 5 is a flowchart showing procedures for abutting a nozzle vane on a closing side;
Fig. 6 is a time chart showing changes in an operation state of an ignition switch, an engine revolution speed, a nozzle vane position and a DC motor current value, relative to the elapse of time, when the abutment is carried out when the engine is stopped;
Fig. 7 is a flowchart showing procedures for setting a reference position; and
Fig. 8 is a time chart showing transition of an engine revolution speed, an opening angle of the variable nozzle and an intake pressure, relative to the elapse of time, for illustrating a conventional method for determining the reference position.

### DETAILED DESCRIPTION OF PREFERRED EMBODIMENTS

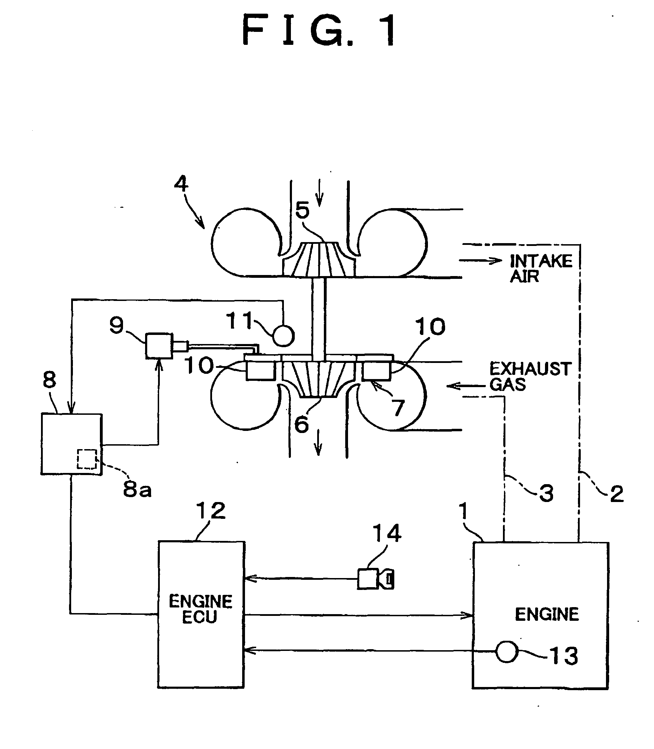

An embodiment of the invention applied to an onboard engine having a variable nozzle type turbocharger will be described referring to Figs. 1 to 7.

As shown in Fig. 1, an upstream portion of an intake passage 2 and a downstream portion of an exhaust passage 3 of an engine 1 are connected to a turbocharger 4, respectively. The turbocharger 4 includes a compressor wheel 5 that sends air to downstream of the intake passage 2 and a turbine wheel 6 that rotates as the exhaust gas passing through the exhaust passage 3 is blown thereto. The compressor wheel 5 rotates together with the turbine wheel 6 so as to increase the amount of air admitted into the engine 1. This makes it possible to increase output of the engine 1.

The turbocharger 4 includes a variable nozzle system 7 in the exhaust passage through which the exhaust gas is blown against the turbine wheel 6. The variable nozzle system 7 serves as a valve system that is opened and closed so as to change the cross section area of the exhaust passage through which the exhaust gas flows. That is, the flow velocity of the exhaust gas blown against the turbine wheel 6 can be adjusted by changing the cross section area of the exhaust passage. The rotating speed of the turbocharger 4 changes as the flow velocity of the exhaust gas is varied so as to adjust a boost pressure (intake pressure) of the engine 1.

A direct current (DC) motor 9 that is controlled by a controller 8 serves as an actuator for operating the variable nozzle system 7. Nozzle vanes (variable nozzles) 10 of the variable nozzle system 7 are operated by driving the DC motor 9. When the nozzle vane 10 displaces towards the closing side, the flow velocity of the exhaust gas blown against the turbine wheel 6 increases to raise the rotating speed of the turbocharger 4, increasing the boost pressure of the engine 1. On the other hand, when the nozzle vanes 10 displace towards the opening side, the flow velocity of the exhaust gas blown against the turbine wheel 6 decreases to reduce the rotating speed of the turbocharger 4, thus reducing the boost pressure of the engine 1.

The controller 8 that drives and controls the DC motor 9 receives signals sent from a nozzle position sensor 11 for detecting the position of the nozzle vane 10, and includes a current detection circuit 8a for detecting a current value of the DC motor 9. The controller 8 is connected to an electronic control unit for engine (engine ECU) 12 that controls operation of the engine 1, and is structured to receive a command sent from the engine ECU 12. The engine ECU 12 receives signals sent from an engine speed sensor 13 for detecting the engine speed and signals sent from an ignition switch 14 operated by a driver of a vehicle to start or stop the engine 1.

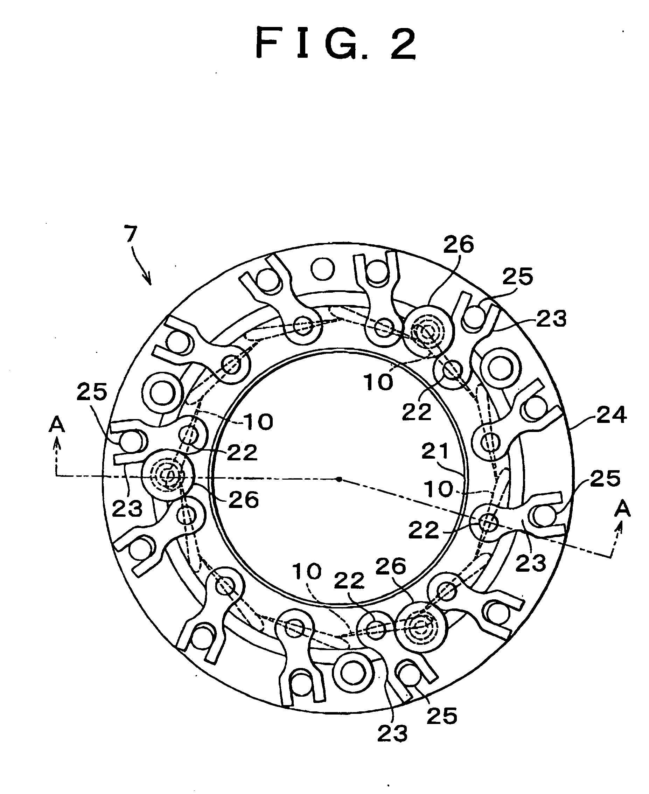

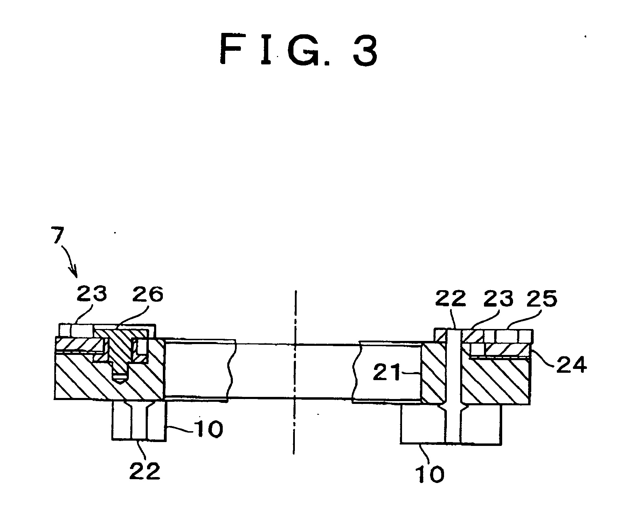

Next, a structure of the variable nozzle system 7 will be explained in detail referring to Figs. 2 and 3. Fig. 2 is a front view of the variable nozzle system 7 as viewed from the side of the compressor wheel 5 (upper side shown in Fig. 1). Fig. 3 is a sectional side view of the variable nozzle system 7 as viewed along a direction of lines A-A of Fig. 2.

As Figs. 2 and 3 illustrate, the variable nozzle system 7 has a ringshaped nozzle back plate 21. In the nozzle back plate 21, a plurality of shafts 22 are disposed at equal angular intervals with respect to the center of the plate 21. Each shaft 22 that penetrates through the nozzle back plate 21 in its thickness direction is rotatably supported. One end (lower end as shown in Fig. 3) of each shaft 22 is secured to the nozzle vane 10. The other end (upper end as shown in Fig. 3) of the shaft 22 is secured to a lever 23 that extends perpendicular to the shaft 22 towards the outer periphery of the nozzle back plate 21.

An annular ring plate 24 is inserted between the lever 23 and the nozzle back plate 21 such that the annular ring plate 24 is overlaid on the nozzle back plate 21. The ring plate 24 is structured to rotate in a circumferential direction upon driving of the DC motor 9. The ring plate 24 has a plurality of pins 25 disposed at equal angular intervals with respect to its center. The pins 25 are connected one another so as to be pivotable with respect to the corresponding lever 23.

As the ring plate 24 turns about its center axis upon driving of the DC motor 9, each pin 25 forces the corresponding lever 23 to move towards a turning direction of the ring plate 24. As a result, the lever 23 serves to turn the shaft 22 so as to operate cach of the nozzle vanes 10 synchronously with respect to the shaft 22. Each distance between adjacent nozzle vanes 10, that is, the exhaust gas flow area of the exhaust passage through which the exhaust gas is blown against the turbine wheel 6 is changed by opening/closing the nozzle vanes 10. The resultant flow velocity of the exhaust gas, thus, is made variable.

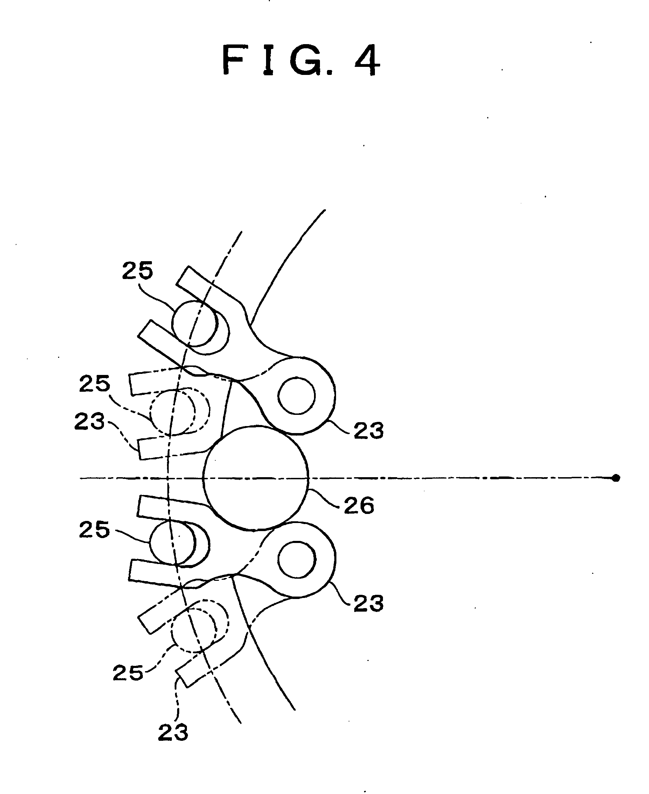

A range in which the distance between adjacent nozzle vanes is adjusted is defined by three stoppers 26 disposed at an equal angular interval with respect to the center. Those stoppers 26 are provided between adjacent levers 23 as shown in Fig. 4. When the nozzle vane 10 is displaced to the full opening position, one of the adjacent levers 23 (lower lever 23 shown in Fig. 4) is brought into abutment on the stopper as shown by a solid line. When the nozzle vane 10 is displaced to the full closing position, the other of the adjacent lever 23 (upper lever 23 shown in Fig. 4) is brought into abutment on the stopper 26 as shown by a chain double dashed line.

As the displacement range of the nozzle vane 10 is defined by the stoppers 26, the opening of the valve vane 10 during normal operation of the engine can be controlled within the defined displacement range. The opening of the valve vane 10 is controlled by the controller 8 that drives the DC motor 9 in accordance with the opening command value sent from the engine ECU 12. The opening command value ranges from 0 to 100 % during normal operation of the engine. As the nozzle vane 10 is controlled to the opening side, the opening command value becomes close to 0%. Meanwhile, as the nozzle vane 10 is controlled to the closing side, the opening command value becomes close to 100 %.

Even when the opening command value is set to 100%, the nozzle vane 10 is displaced to the closing side but the lever 23 is not brought into abutment on the stopper 26. That is, during the normal engine operation, the nozzle vane 10 is displaced between the full opening position and the position just before full closing position in response to the opening command value ranging from 0 to 100 %. When the opening command value is kept 100 %, the nozzle vane 10 is held at a position just before the location where the nozzle vane 10 is brought into abutment on the stopper 26, that is, the position just before the full closing position.

The opening of the nozzle vane 10 is controlled so as to be displaced to a predetermined reference position. It is preferable to set the point close to the full closing position as the reference position such that the nozzle vane 10 located close to the full closing position is displaced.

Various techniques for controlling the valve vanc 10 to set the reference position have been proposed. In the case where the controller 8 has a backup RAM as the non-volatile memory, the reference position determined by the aforementioned control can be stored in the backup RAM. The nozzle vane 10 is controlled on the basis of the reference position stored in the backup RAM.

In the case where the controller 8 has no backup RAM for the purpose of cost reduction, the reference position has to be determined at every engine operation because the reference position will be lost upon stop of the engine.

In this embodiment, since no backup RAM is employed, the opening command value is set to the value that exceeds 100 %, for example, 110 % during stop of the engine. Then the nozzle vane 10 is displaced to the closing side until the lever 23 abuts on the stopper 26. The reference position is set during the subsequent start-up of the engine on the basis of the position of the nozzle vane 10 when the lever 23 abuts on the stopper 26 (the setting of the reference value will be described later). This makes it possible to set the reference position for the displacement of the nozzle vane 10 to the point close to the full closing position. As a result, the nozzle vane 10 can be accurately displaced on the basis of the reference position.

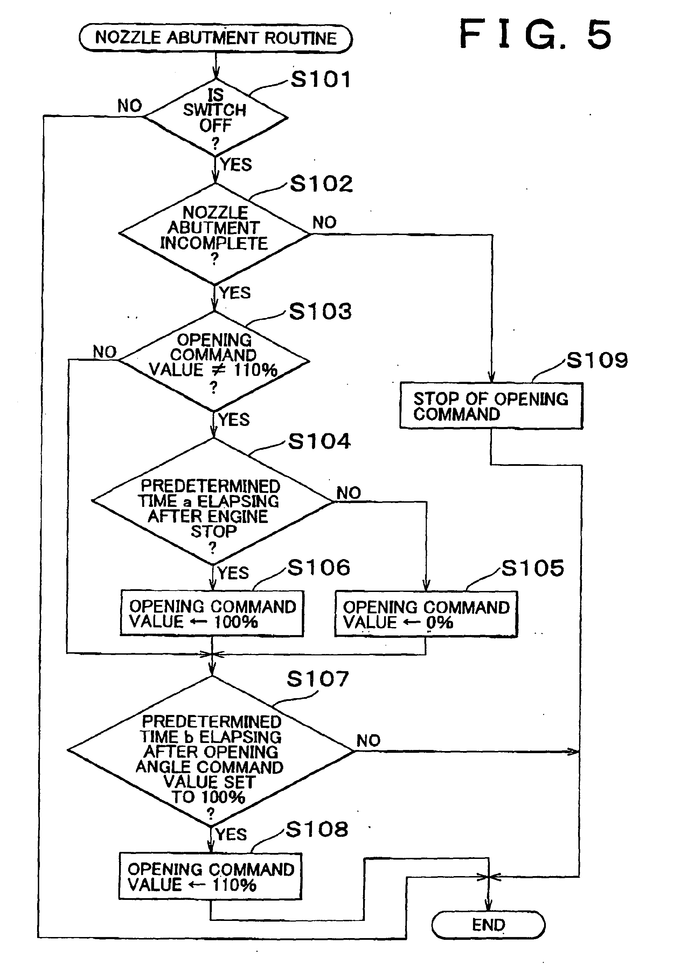

The procedure for displacing the nozzle vane 10 to the closing side during stop of the engine until the lever 23 abuts on the stopper 26 will be described referring to the flowchart shown in Fig. 5. The nozzle abutment routine is executed by the engine ECU 12 as the interruption at a predetermined time interval.

In the routine of the flowchart shown in Fig. 5, when it is determined that the ignition switch 14 is turned off, that is, YES is obtained in step S101, the process proceeds to step S102 and subsequent steps such that the nozzle vane 10 is displaced toward the closing side. In step S102, it is determined whether abutment of the nozzle vane 10 on the closing side has been completed. If the current value of the DC motor 9 driven to displace the nozzle vane 10 toward the closing side becomes a predetermined value x or greater, it is determined that the abutment has been completed.

If YES is obtained in step S102, the process proceeds to step S103 where it is determined whether the opening command value is the value other than 110%. If YES is obtained in step S103, the process proceeds to step S104 and subsequent step S105 or S106 prior to the abutment of the nozzle vane 10 on the closing side. If NO is obtained in step S104, that is, a predetermined time period a has not elapsed after stop of the engine 1, the opening command value is set to 0% in step S105. If YES is obtained in step S104, that is, the predetermined time period a has elapsed, the opening command value is set to 100% in step S106. The predetermined time period a is set to the time sufficient for the nozzle vane 10 to fully open after stop of the engine 1.

The process then proceeds to step S107 where it is determined whether a predetermined time period b has elapsed from a moment at which the opening command value is set to 100%. If YES is obtained in step S107, the process proceeds to step S108 where the opening command value is set to 110%. The predetermined time period b is set to a time sufficient for the nozzle vane 10 to be displaced to a position just before the full close position from a moment at which the opening command value is set to 100%. Further, after the opening command value is set to 110%, if NO is obtained in step S102, that is, if it is determined that the abutment of the nozzle vane 10 on the closing side has been completed, the process proceeds to step S109 where the opening command is terminated.

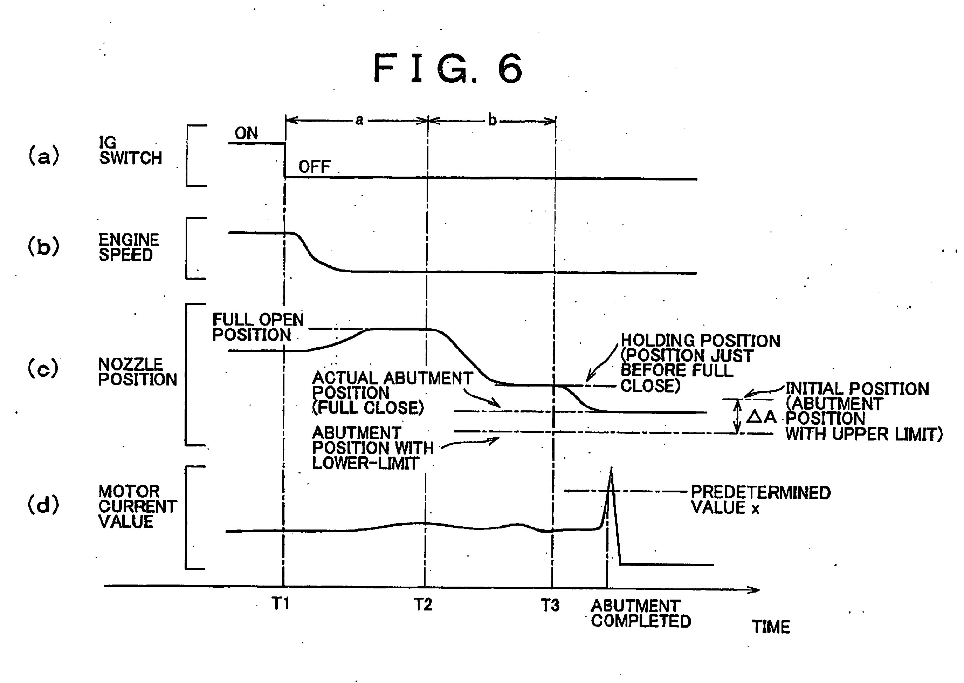

The change in the operation of the nozzle vane 10 upon issue of the opening command during stop of the engine will be described referring to a time chart in Fig. 6. Each change in the ON/OFF state of the ignition switch 14, engine speed, position of the nozzle vane 10, and the current value of the DC motor 9 along the time axis is represented by (a), (b), (c), and (d), respectively.

When the ignition switch 14 is turned off from the on state for stopping the engine (at a timing T1), the engine speed is gradually reduced. At this time, the opening command value is set to 0%, and thus the nozzle vane 10 is displaced towards the full-open position. The displacement of the nozzle vane 10 toward the full-open position may remove deposit on the displacement path close to the full open position in the turbocharger 4.

When the nozzle vane 10 is displaced to the full open position with the elapse of the predetermined time period a from the operation of the ignition switch to off state (at timing T2), the opening command value is set to 100 % so as to bring the nozzle vane 10 into the position just before the full close position. The opening command value is kept 100 % until the elapse of the predetermined time b from the moment when the opening command value is set to 100 %. Then at a time when the predetermined time b has elapsed (at timing T3), the opening command value is set to 110 % so as to displace the nozzle vane 10 until the lever 23 abuts on the stopper 26.

The nozzle vane 10 is kept on a position just short of the full closing position before it is brought into abutment on the closing side. The displacement of the nozzle vane 10 toward the closing side is temporarily stopped so as to reduce the shock caused by the abutment of the lever 23 on the stopper 26.

Further, electric current is continuously supplied to the DC motor 9 even after the nozzle vane 10 is brought into abutment on the closing side. The current value of the DC motor 9 becomes greater than a predetermined value x. As a result, it is determined that abutment of the nozzle vane 10 on the closing side has been completed. The DC motor 9 then is stopped. The position at which the nozzle vane 10 abuts on the closing side is determined as the full closing position.

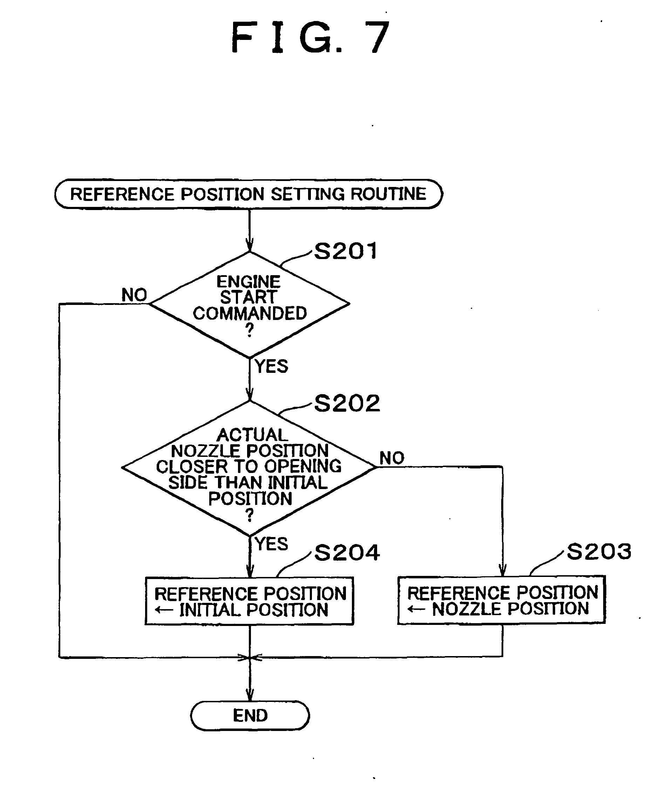

The procedure for setting the reference position for displacement of the nozzle vane 10 will be described referring to the flowchart of Fig. 7 that represents the routine for setting the reference position. This routine is executed by the controller 8 by an interruption at a predetermined time interval.

Referring to the flowchart of Fig. 7, if the engine start-up command is issued at a time when the ignition switch 14 is turned on, that is, YES is obtained in step S201, the process proceeds to step S202. In step S202, it is determined whether the actual position of the nozzle vane 10 at this time is closer to the opening side than an initial position to be described later.

The actual position of the nozzle vane 10 as described above is obtained based on a detection signal from the nozzle position sensor 11 at start-up of the engine. That is, the actual position is normally obtained as the position at which it is determined that the nozzle vane 10 is brought into abutment on the closing side during stop of the engine. The initial position is set to the position as the maximum closing side with allowance ΔA so as to cover variance in the abutment position depending on the product as shown in Fig. 6(c). That is, the initial position is set to be in the range from the position where the nozzle vane is kept just in front of the full closing position and the full closing position as the abutment position. In this embodiment, the initial position is set to the maximum opening position with allowance to cover variance depending on the members so as to prevent unnecessary increase in the boost pressure at the risk of output performance during operation of the engine and to improve reliability. If the initial position is set to the maximum closing position with allowance, the opening control range of the nozzle vane is shifted toward the closing side. This may cause undesirable increase in the boost pressure, thus deteriorating the reliability.

If the nozzle vane 10 is closer to the opening side than the initial position for a certain reason at start-up of the engine, YES is obtained in step S202. The process then proceeds to step S204 where the aforementioned initial position is set as the reference position. Meanwhile, if NO is obtained in step S202, the process proceeds to step S203 where the actual position of the nozzle vane 10 (abutment position) is set as the reference position.

According to the aforementioned embodiment, the following effects can be obtained.
(1) When the nozzle vane 10 is displaced towards the closing side during engine operation in order to determine the reference position, the rotating speed of the turbocharger 4 increases excessively and accordingly, the boost pressure of the engine 1 becomes excessively high. In the embodiment, the nozzle vane 10 is displaced towards the closing side for determining the reference position during stop of the engine. This makes it possible to displace the nozzle vane 10 towards the closing side until the lever 23 abuts on the stopper 26 without causing any disadvantages as described above. The position obtained at which the nozzle vane 10 is brought into abutment on the closing side, that is, the abutment position, is set as the reference position at start-up of the engine. As the reference position can be determined immediately after start-up of the engine, the nozzle vane 10 can be accurately displaced on the basis of the reference position.
(2) In the case where the nozzle vane 10 is closer to the opening side than the initial position at start-up of the engine for a certain reason, the initial position is set as the reference position. The nozzle vane 10 can be accurately displaced on the basis of the reference position at the earlier stage immediately after the start-up of the engine.
(3) When the current value of the DC motor 9 that is driven for displacing the nozzle vane 10 becomes greater than a predetermined value x, it is determined that abutment of the nozzle vane 10 on the closing side is completed. Therefore, such determination can be made accurately.
(4) In order to determine the reference position by displacing the nozzle vane 10 to be brought into abutment on the closing side, there may arise a case in which the nozzle vane 10 never displaces towards the opening side during operation of the engine. In the above case, deposits on the displacement path close to the full opening side in the exhaust passage of the turbocharger 4 cannot be removed by the nozzle vane 10 during operation of the engine. On the contrary, in the embodiment, the nozzle vane 10 is displaced toward the full open position before it is brought into abutment on the closing side during stop of the engine. As the nozzle vane 10 is forced to be displaced toward the full opening position, there is little chance for missing removal of the deposits.
(5) The displacement of the nozzle vane 10 towards the closing side is temporarily stopped just before its abutment on the closing side during stop of the engine. This makes it possible to reduce the shock caused by the abutment of the lever 23 on the stopper 26.

The embodiment may be modified as described below.
(a) In the embodiment, the displacement of the nozzle vane 10 towards the closing side is temporarily stopped just before its abutment on the closing side during stop of the engine. However, the speed at which the nozzle vane 10 displaces may be reduced instead of temporarily stopping the displacement.
(b) Upon abutment of the nozzle vane 10 on the closing side, there is no need of temporarily stopping the displacement nor decelerating the displacement speed.
(c) In the embodiment, the nozzle vane 10 is displaced to the full opening position as the limit of the displacement range during stop of the engine. However, the nozzle vane 10 does not have to be displaced to the full opening position. The nozzle vane 10 may be displaced towards the opening side until it reaches a certain point within the displacement range. If the nozzle vane 10 is displaced to the full opening position as described in the embodiment, the deposits on the displacement path in the exhaust passage can be removed.
(d) The nozzle vane 10 does not have to be displaced towards the full opening position.
(e) The actuator other than DC motor 9 can be employed to drive the variable nozzle system 7. Other types of electric motor such as the torque motor and the rotary solenoid may be employed as the actuator.
(f) The determination as to completion of the abutment of the nozzle vane 10 on the closing side may be made on the basis of the position of the nozzle vane 10 derived from the detection signal of the nozzle position sensor 11.
(g) In the embodiment, the nozzle vane 10 of the variable nozzle type turbocharger is exemplified as the driven member that is displaced by the actuator such as the DC motor 9.

Advantageous points that can be derived from the aforementioned embodiment will be described below.
(1) In a control apparatus of an actuator for displacing a variable nozzle of an internal combustion engine within a displacement range defined by a stopper is provided with a controller that drives the actuator until the variable nozzle abuts on the stopper in a stopped state of the internal combustion engine, determines a position of the variable nozzle when it abuts on the stopper as a reference position, and displaces the variable nozzle based on the determined reference position at a start-up of the engine subsequent to the stopped state of the internal combustion engine.
   If the variable nozzle is displaced towards the closing side until it abuts on the stopper during engine operation, the area of the exhaust passage through which the exhaust gas of the internal combustion engine flows is reduced. Accordingly the flow velocity of the exhaust gas blown against the turbine wheel is increased to unnecessarily increase the rotating speed of the turbocharger. This may cause an adverse influence on the operating state of the engine. According to the aforementioned embodiment, as the variable nozzle is displaced during stop of the engine, the reference position of the nozzle to be displaced at the subsequent start-up of the engine can be determined without causing adverse influence on the operating state of the engine. Therefore the variable nozzle can be accurately displaced immediately after the start-up of the engine on the basis of the reference position that has been already determined.
(2) when the driven member (10) is located farther away from the stopper than a predetermined initial position, the control means sets the predetermined initial position as the reference position.
   According to the embodiment, even when the variable nozzle displaced towards the closing side has not reached the stopper at the next start-up of the engine for a certain reason, it can be accurately displaced at the earlier stage immediately after the start-up of the engine on the basis of the initial position as the reference position.
(3) In the embodiment, an electric motor serves as the actuator. The controller determines that abutment of the variable nozzle on the stopper has been completed when the current value of the electric motor becomes greater than a predetermined value.
   The above-described structure makes it possible to determine completion of the abutment of the variable nozzle on the stopper accurately.
(4) The control device displaces the variable nozzle towards the opening side before abutment of the variable nozzle on the stopper.

In order to determine the reference position by displacing the nozzle vane 10 to be brought into abutment on the closing side, there may arise a case in which the nozzle vane 10 never displaces towards the opening side during operation of the engine. In the above case, deposits on the displacement path close to the full opening side in the exhaust passage of the turbocharger 4 cannot be removed by the nozzle vane 10 during operation of the engine. On the contrary, in the embodiment, the nozzle vane 10 is displaced toward the full open position before it is brought into abutment on the closing side during stop of the engine. As the nozzle vane 10 is forced to be displaced toward the full opening position, there is little chance for missing removal of the deposits.

It is preferable to displace the variable nozzle to the point close to the full opening position for removing the deposits. In this case, the deposits on the displacement path can be removed at least once during an operation cycle of the engine.

The control device temporarily stops or decelerates the displacement of the variable nozzle towards the stopper at the closing side just before its abutment on the stopper.

The aforementioned structure is capable of reducing the shock caused by the abutment of the variable nozzle on the stopper.

In a stopped state of an engine, a nozzle vane 10 of a variable nozzle system 7 of a turbocharger 4 is displaced until it abuts on a stopper at a closing side. The position at which the nozzle vane 10 abuts on the stopper is set as a reference position based on which the nozzle vane 10 is displaced upon subsequent start-up of the engine.

In a stopped state of an engine, a nozzle vane (10) of a variable nozzle system (7) of a turbocharger (4) is displaced until it abuts on a stopper at a closing side. The position at which the nozzle vane (10) abuts on the stopper is set as a reference position based on which the nozzle vane (10) is displaced upon subsequent start-up of the engine.

## Claims

1. A control apparatus (8) of an internal combustion engine (1) for controlling an actuator (9) which displaces a driven member (10) within a displacement range confined by a stopper (26), wherein said driven member (10) is a variable nozzle of a variable nozzle turbocharger, the control apparatus (8) comprising control means that drives the actuator (9) in a stopped state of the internal combustion engine until the driven member (10) abuts on the stopper (26) and determines the position of the driven member (10) when it abuts on the stopper as reference position,
**characterized in that**
at a start-up of the engine subsequent to the stopped state of the internal combustion engine (1), the control means displaces the driven member based on the determined reference position.

2. A control apparatus of an actuator according to claim 1, wherein the actuator (9) comprises an electric motor.

3. A control apparatus of an actuator according to claims 1 or 2, wherein
when the driven member (10) is located farther away from the stopper (26) than a predetermined initial position at a next start-up of the engine, the control means sets the predetermined initial position as the reference position.

4. A control apparatus of an actuator according to claim 3, wherein the initial position is determined as a theoretical position with an allowance at which the driven member (10) is brought into abutment on the stopper (26).

5. A control apparatus of an actuator according to any one of claims 1 to 4, wherein the control means monitors an operating state of the actuator (9), and determines whether an abutment of the driven member (10) on the stopper (26) has been completed on the basis of the monitored operating state of the actuator (9).

6. A control apparatus of an actuator according to claim 5, wherein the control means (8) determines that an abutment of the driven member (10) on the stopper (26) has been completed when a current value of the actuator (9) exceeds a predetermined value.

7. A control apparatus of an actuator according to any one of claims 1 to 6, wherein the control means (8) displaces the driven member (10) in a direction reverse to that of the abutment before the driven member (10) abuts on the stopper (26).

8. A control apparatus of an actuator according to any one of claims 1 to 7, wherein the control means (8) temporarily decelerates or stops the displacement of the driven member (10) towards the stopper (26) just before the driven member (10) abuts on the stopper (26).

9. A control method of an internal combustion engine (1) for controlling an actuator (9) which displaces a driven member (10) within a displacement range confined by a stopper (26), wherein said driven member (10) is a variable nozzle of a variable nozzle turbocharger, comprising
driving the actuator (9) in a stopped state of the internal combustion engine until the driven member (10) abuts on the stopper (26) and determining the position of the driven member (10) when it abuts on the stopper (26) as a reference position;
**characterized by the step of**
displacing the driven member (10) based on the determined reference position at a start-up of the engine subsequent to the stopped state of the internal combustion engine.

10. A control method according to claim 9, wherein
when the driven member (10) is located farther away from the stopper (26) than a predetermined initial position at a next start-up of the engine, the predetermined initial position is set as the reference position.

11. A control method according to claims 9 or 10, wherein an operating state of the actuator (9) is monitored and it is determined whether an abutment of the driven member (10) on the stopper (26) has been completed on the basis of the monitored operating state of the actuator (9).

12. A control method according to any one claims 9 to 11,
wherein the driven member (10) is displaced in a direction reverse to that of the abutment before the driven member (10) abuts on the stopper (26).

13. A control method according to any one of claims 9 to 12, wherein the displacement of the driven member (10) towards the stopper (26) is temporarily decelerated or stopped just before the driven member (10) abuts on the stopper (26).

## Patentansprüche

1. Steuergerät (8) für eine Brennkraftmaschine (1) zum Steuern eines Aktuators (9), der ein angetriebenes Element (10) innerhalb eines Versetzungsbereichs versetzt, der durch einen Stopper (26) begrenzt ist, wobei das angetriebene Element (10) eine variable Düse eines Turboladers mit variabler Düse ist, und wobei das Steuergerät (8) eine Steuereinrichtung aufweist, die den Aktuator (9) bei einem Stopp-Zustand der Brennkraftmaschine antreibt, bis das angetriebene Element (10) an den Stopper (26) anschlägt, und die die Position des angetriebenen Elements (10) als die Referenzposition bestimmt, wenn es an den Stopper anschlägt,
**dadurch gekennzeichnet, dass**
bei einem Start der Kraftmaschine nach dem Stopp-Zustand der Brennkraftmaschine (1) die Steuereinrichtung das angetriebene Element auf der Grundlage der bestimmten Referenzposition versetzt.

2. Steuergerät eines Aktuators gemäß Anspruch 1, wobei der Aktuator (9) einen Elektromotor aufweist.

3. Steuergerät eines Aktuators gemäß Anspruch 1 oder 2, wobei
wenn sich das angetriebene Element (10) von dem Stopper (26) weiter entfernt als eine vorbestimmte Anfangsposition bei einem nächsten Start der Kraftmaschine befindet, die Steuereinrichtung die vorbestimmte Anfangsposition als die Referenzposition festlegt.

4. Steuergerät eines Aktuators gemäß Anspruch 3, wobei die Anfangsposition als eine theoretische Position mit einer Toleranz bestimmt wird, bei der das angetriebene Element (10) an den Stopper (26) anschlägt.

5. Steuergerät eines Aktuators gemäß einem der Ansprüche 1 bis 4, wobei die Steuereinrichtung einen Betriebszustand des Aktuators (9) überwacht und auf der Grundlage des überwachten Betriebszustands des Aktuators (9) bestimmt, ob ein Anschlagen des angetriebenen Elements (10) an den Stopper (26) abgeschlossen ist.

6. Steuergerät eines Aktuators gemäß Anspruch 5, wobei die Steuereinrichtung (8) bestimmt, dass das Anschlagen des angetriebenen Elements (10) an den Stopper (26) abgeschlossen ist, wenn eine Stromstärke des Aktuators (9) einen vorbestimmten Wert überschreitet.

7. Steuergerät eines Aktuators gemäß einem der Ansprüche 1 bis 6, wobei die Steuereinrichtung (8) das angetriebene Element (10) in einer Richtung entgegen der Richtung des Anschlagens versetzt, bevor das angetriebene Element (10) an den Stopper (26) anschlägt.

8. Steuergerät eines Aktuators gemäß einem der Ansprüche 1 bis 7, wobei die Steuereinrichtung (8) die Versetzung des angetriebenen Elements (10) zu dem Stopper (26) vorübergehend verzögert oder stoppt, direkt bevor das angetriebene Element (10) an den Stopper (26) anschlägt.

9. Steuerverfahren für eine Brennkraftmaschine (1) zum Steuern eines Aktuators (9), der ein angetriebenes Element (10) innerhalb eines Versetzungsbereichs versetzt, der durch einen Stopper (26) begrenzt ist, wobei das angetriebene Element (10) eine variable Düse eines Turboladers mit variabler Düse ist, mit den folgenden Schritten:
Antreiben des Aktuators (9) bei einem Stopp-Zustand der Brennkraftmaschine, bis das angetriebene Element (10) an den Stopper (26) anschlägt, und Bestimmen der Position des angetriebenen Elements (10) als eine Referenzposition, wenn es an den Stopper (26) anschlägt;
Versetzen des angetriebenen Elements (10) auf der Grundlage der bestimmten Referenzposition bei einem Start der Kraftmaschine nach dem Stopp-Zustand der Brennkraftmaschine.

10. Steuerverfahren gemäß Anspruch 9, wobei
wenn sich das angetriebene Element (10) von dem Stopper (26) weiter entfernt als eine vorbestimmte Anfangsposition bei einem nächsten Start der Kraftmaschine befindet, die vorbestimmte Anfangsposition als die Referenzposition festgelegt wird.

11. Steuerverfahren gemäß Anspruch 9 oder 10, wobei ein Betriebszustand des Aktuators (9) überwacht wird, und wobei auf der Grundlage des überwachten Betriebszustands des Aktuators (9) bestimmt wird, ob ein Anschlagen des angetriebenen Elements (10) an den Stopper (26) abgeschlossen ist.

12. Steuerverfahren gemäß einem der Ansprüche 9 bis 11, wobei das angetriebene Element (10) in einer Richtung entgegen der Richtung des Anschlagens versetzt wird, bevor das angetriebene Element (10) an den Stopper (26) anschlägt.

13. Steuerverfahren gemäß einem der Ansprüche 9 bis 12, wobei das Versetzen des angetriebenen Elements (10) zu dem Stopper (26) vorübergehend verzögert oder gestoppt wird, direkt bevor das angetriebene Element (10) an den Stopper (26) anschlägt.

## Revendications

1. Dispositif de commande (8) d'un moteur à combustion interne (1) destiné à commander un actionneur (9) qui déplace un élément entraîné (10) à l'intérieur d'une plage de déplacement délimitée par un élément d'arrêt (26), dans lequel ledit élément entraîné (10) est une tuyère variable d'un turbocompresseur à tuyère variable, le dispositif de commande (8) comprenant un moyen de commande qui entraîne l'actionneur (9) dans un état arrêté du moteur à combustion interne jusqu'à ce que l'élément entraîné (10) bute sur l'élément d'arrêt (26) et détermine la position de l'élément entraîné (10) lorsqu'il bute sur l'élément d'arrêt en tant que position de référence,
**caractérisé en ce que**
lors d'un démarrage du moteur à la suite de l'état arrêté du moteur à combustion interne (1), le moyen de commande déplace l'élément entraîné sur la base de la position de référence déterminée.

2. Dispositif de commande d'un actionneur selon la revendication 1, dans lequel l'actionneur (9) comprend un moteur électrique.

3. Dispositif de commande d'un actionneur selon les revendications 1 ou 2, dans lequel
lorsque l'élément entraîné (10) est situé plus loin de l'élément d'arrêt (26) qu'une position initiale prédéterminée lors d'un démarrage suivant du moteur, le moyen de commande établit la position initiale prédéterminée en tant que position de référence.

4. Dispositif de commande d'un actionneur selon la revendication 3, dans lequel la position initiale est déterminée en tant que position théorique avec une tolérance à laquelle l'élément entraîné (10) est amené en butée sur l'élément d'arrêt (26).

5. Dispositif de commande d'un actionneur selon l'une quelconque des revendications 1 à 4, dans lequel le moyen de commande surveille un état de fonctionnement de l'actionneur (9), et détermine si une butée de l'élément entraîné (10) sur l'élément d'arrêt (26) a été achevée sur la base de l'état de fonctionnement surveillé de l'actionneur (9).

6. Dispositif de commande d'un actionneur selon la revendication 5, dans lequel le moyen de commande (8) détermine qu'une butée de l'élément entraîné (10) sur l'élément d'arrêt (26) a été achevée lorsqu'une valeur de courant de l'actionneur (9) dépasse une valeur prédéterminée.

7. Dispositif de commande d'un actionneur selon l'une quelconque des revendications 1 à 6, dans lequel le moyen de commande (8) déplace l'élément entraîné (10) dans un sens inverse de celui de la butée avant que l'élément entraîné (10) ne bute sur l'élément d'arrêt (26).

8. Dispositif de commande d'un actionneur selon l'une quelconque des revendications 1 à 7, dans lequel le moyen de commande (8) décélère ou arrête temporairement le déplacement de l'élément entraîné (10) vers l'élément d'arrêt (26) juste avant que l'élément entraîné (10) ne bute sur l'élément d'arrêt (26).

9. Procédé de commande d'un moteur à combustion interne (1) destiné à commander un actionneur (9) qui déplace un élément entraîné (10) à l'intérieur d'une plage de déplacement délimitée par un élément d'arrêt (26), dans lequel ledit élément entraîné (10) est une tuyère variable d'un turbocompresseur à tuyère variable, comprenant
l'entraînement de l'actionneur (9) dans un état arrêté du moteur à combustion interne jusqu'à ce que l'élément entraîné (10) vienne buter sur l'élément d'arrêt (26) et la détermination de la position de l'élément entraîné (10) lorsqu'il bute sur l'élément d'arrêt (26) en tant que position de référence,
**caractérisé par** l'étape consistant à
déplacer l'élément entraîné (10) sur la base de la position de référence déterminée à un démarrage du moteur à la suite de l'état arrêté du moteur à combustion interne.

10. Procédé de commande selon la revendication 9, dans lequel lorsque l'élément entraîné (10) est situé plus loin de l'élément d'arrêt (26) qu'une position initiale prédéterminée lors d'un démarrage suivant du moteur, la position initiale prédéterminée est établie en tant que position de référence.

11. Procédé de commande selon les revendications 9 ou 10, dans lequel un état de fonctionnement de l'actionneur 9 est surveillé et il est déterminé si une butée de l'élément entraîné (10) sur l'élément d'arrêt (26) a été achevée sur la base de l'état de fonctionnement surveillé de l'actionneur (9).

12. Procédé de commande selon l'une quelconque des revendications 9 à 11, dans lequel l'élément entraîné (10) est déplacé dans un sens inverse de celui de la butée avant que l'élément entraîné (10) ne bute sur l'élément d'arrêt (26).

13. Procédé de commande selon l'une quelconque des revendications 9 à 12, dans lequel le déplacement de l'élément entraîné (10) vers l'élément d'arrêt (26) est décéléré ou stoppé temporairement juste avant que l'élément entraîné (10) ne bute sur l'élément d'arrêt (26).
